# EUROPEAN PATENT SPECIFICATION

(11) **EP 1 737 651 B1**
(45) Date of publication and mention of the grant of the patent: **29.02.2012**
(21) Application number: 05732916.1
(22) Date of filing: 04.04.2005
(51) Int. Cl.: B32B 9/04, A23B 4/10, A23B 4/24, A23L 3/358

(54) **IMPROVED PACKAGING METHOD THAT CAUSES AND MAINTAINS THE PREFERRED RED COLOR OF FRESH MEAT**
VERBESSERTES VERPACKUNGSVERFAHREN ZUR HERSTELLUNG UND BEIBEHALTUNG DER BEVORZUGTEN ROTFÄRBUNG VON FRISCHEM FLEISCH
PROCEDE D'EMBALLAGE AMELIORE QUI ENTRAINE ET MAINTIENT LA COULEUR ROUGE PREFEREE DE VIANDE FRAICHE

(30) Priority: 02.04.2004 US 559350 P
(43) Date of publication of application: 03.01.2007
(73) Proprietor: CURWOOD, INC., Oshkosh, Wisconsin 54904 (US)
(72) Inventor: SIEGEL, Dan G., Belleville, IL 62223 (US); NELSON, Kevin Philip, Appleton, Wisconsin 54914 (US)
(74) Representative: Ackroyd, Robert
(86) International application number: PCT/US2005/011387
(87) International publication number: WO 2005/097486

(56) References cited:
- EP-A- 0 473 091
- WO-A-96/14760
- WO-A-03/009709
- WO-A-2004/039683
- JP-A- 57 155 975
- US-A- 2 621 129
- US-A- 2 925 346
- US-A- 2 925 346
- US-A- 5 573 797
- US-A1- 2001 055 640
- US-A1- 2007 014 947
- US-A1- 2007 014 953
- US-B1- 6 632 773

## Description

### FIELD OF THE INVENTION

The present invention relates to food packaging, and more specifically to a method and packaging film adapted to transfer a material to a food surface to promote an attractive appearance of the food product contained in the packaging.

### BACKGROUND AND SUMMARY OF THE INVENTION

By itself, color remains the single most important quality characteristic of meat that affects its merchandizability. Consumers use color as an indicator of freshness. The color of meat comes from myoglobin. This is a complex pigmented protein present in the muscle tissue of all animals. Its biological function is for oxygen storage and delivery. It achieves this function by reversibly binding molecular oxygen, thereby creating an intracellular source of oxygen for the mitochondria. Pork and poultry contain lower amounts of myoglobin than beef and thus are lighter in color than beef.

Myoglobin consists of a non-protein portion called heme and a protein portion called globin. The protein portion is a large polypeptide chain that determines the three dimensional configuration of the myoglobin molecule. The heme portion consists of an iron atom in a planar ring. The globin portion surrounds the heme group and interacts with it in a manner that stabilizes the molecule. The heme group is the reactive center of myoglobin. It has an open binding site that attracts a ligand. The ligand must be small enough to fit into the heme pocket and have the proper electron configuration to bond to the iron atom. Oxygen meets these requirements perfectly and this is how myoglobin carries out its biological function to transport oxygen from the blood to the mitochondria.

When oxygen enters the heme pocket, its electron configuration changes the shape of the globin portion of the molecule in a manner that affects light absorption characteristics. It is the presence or absence of a ligand in the heme pocket, and the ligand itself that affects visible color changes of myoglobin.

When there is no ligand in the heme pocket, myoglobin is in its native state. This form of the molecule is called deoxymyoglobin. Its color is purple. When oxygen is present at high concentrations such as the level in the earth's atmosphere, it is pulled into the heme pocket and deoxymyoglobin becomes oxymyoglobin. Its color is red. If oxygen tension becomes low it tends to dissociate from the oxymyoglobin molecule. When this occurs there is a tendency for the oxygen to take an electron from the iron atom and leave it in the ferric state. As this occurs, a water molecule moves into the heme pocket and becomes the ligand that affects light absorption. The oxidized form of myoglobin with H₂0 in the prosthetic heme group is referred to as metmyoglobin and its color is brown. When the chemical state of iron changes from ferrous (Fe⁺²) to ferric (Fe⁺³), the three-dimensional structure of the globin part changes in a manner that allows water into the heme pocket. The oxidation of the iron atom always causes a brown color.

Other variables that affect the stability of the globin portion also affect the affinity of the heme group for oxygen and the tendency of the chemical state of the iron atom to become oxidized. Acidity and high temperature, such as that associated with cooking, can denature the globin part thus leading to instability of the heme group. In the absence of stabilizing ligands the oxidation of the heme iron is automatic when the globin is denatured.

In fresh meat (postmortem muscle tissue) oxygen is continually associating and disassociating from the heme complex. Thus, it is the relative abundance of three forms of the muscle pigment that determines the visual color of fresh meat. In summary they include deoxymyoglobin (reduced myoglobin), which is purple; oxymyoglobin (oxygenated myoglobin) which is red; and metmyoglobin (oxidized myoglobin) which is brown.

The deoxymyoglobin form dominates immediately after the animal is slaughtered. Thus, freshly cut meat has a purple color. This purple color can persist for a long time if the pigment is not exposed to oxygen. Cutting or grinding exposes the pigment to oxygen in the atmosphere, and the purple color quickly converts to either bright red (oxymyoglobin) or brown (metmyoglobin). Even though deoxymyoglobin is technically fresher, it is the red or bloomed meat color that consumers use as their primary criterion for perceiving freshness.

Changes in the relative percentage of each of these forms continue to occur the longer fresh meat is exposed to oxygen. The immediate conversion of the purple color to the desirable bright red or undesirable brown depends upon the partial pressure of oxygen at the surface. The purple color is favored at the very low oxygen levels. It dominates at levels of 0-0.2%. The brown color is favored when the partial pressure of oxygen is only slightly higher (0.2% to 5.0%). Consumer discrimination begins when the relative amount of metmyoglobin is 20%. A distinctly brown color is evident at 40% metmyoglobin, which typically renders the meat unsaleable.

There are biochemical reactions that occur in muscle tissue after death that are important to fresh meat color. These reactions are caused by the presence of active glycolytic enzymes that convert oxygen to carbon dioxide. The effect on meat color is the presence of reducing coenzymes that continually convert metmyoglobin back to deoxymyoglobin. These reducing coenzymes are called metmyoglobin reductases, and their activity is called "MRA" which is an abbreviation for metmyoglobin reducing activity. MRA can be described as the ability of muscle to reduce metmyoglobin back to its natural deoxymyoglobin state. It is lost when the oxidizable substrates are depleted or when heat or acid denatures the enzymes. When the enzymes lose their activity or are denatured, the iron of the heme pigment automatically oxidizes to the metmyoglobin form, and the brown color stabilizes and dominates.

MRA persists for a period of time after death depending on the amount of exposure of the meat tissue to oxygen. During this time oxygen is continually consumed by the meat tissue. The oxygen consumption rate is referred to as "OCR". When meat that has a high OCR is exposed to oxygen, the oxygen tension is reduced so rapidly that the metmyoglobin is favored below the viewing surface. If it is close to the viewing surface, the perceived color of the meat is affected. The MRA is important to minimize this layer of metmyoglobin that forms between the bloomed surface and purple interior. As the MRA wears out, the brown metmyoglobin layer thickens and migrates toward the surface, thus terminating display life. When the MRA is high, the metmyoglobin layer is thin and sometimes not visible to the naked eye.

There is a practical relationship of MRA and OCR to the specifications of a package intended for retail sale in order to prolong the desirable appearance of meat as long as possible. Hermetically sealed packages with films that are a barrier to oxygen will cause a low oxygen tension on the meat surface. Thus, metmyoglobin formation occurs and the viewing surface changes to an undesirable brown color. However, if the OCR is high enough to keep ahead of the oxygen that migrates across the packaging film, and the MRA is good enough to reduce metmyoglobin that forms on the surface, then native deoxymyoglobin replaces metmyoglobin. After a period of time, the perceived color changes from brown to purple. Both of these colors are unacceptable to the consumer. For this reason, vacuum packaging by itself has historically been an unacceptable format for case ready fresh meat. On the other hand, vacuum packaging is the format of choice for cooked and cured processed meats where the myoglobin pigment is denatured by heat and stabilized by the presence of nitrite. When oxygen is eliminated from a cured processed meat package, the product's color and flavor deteriorate slower than when oxygen is present.

Some fresh meat applications are suited to vacuum packaging because of its inherent advantages in protecting product quality. For example vacuum packaging is commonly used for wholesale primals and subprimals as well as for frozen steaks. The product's color is not critical in these applications. However, the color of retail cuts is very critical and the color caused by vacuum packaging is unacceptable. Thus, the industry has not been able to capitalize on the benefits of vacuum packaging for case ready applications.

As mentioned previously, the prosthetic heme group is responsible for color. Relevant literature teaches us that ligands other than oxygen or water also affect meat color. For example, cyanide and fluorine cause a brown color, carbon monoxide (CO) causes the preferred bright red color and nitric oxide (NO) causes a dull red color. In particular, methods of treating fresh meat with carbon monoxide have been developed for case ready packaging applications. The bright red myoglobin complex is referred to as carboxymyoglobin.

Sodium nitrite also affects color when added to meat. This approved additive is a commonly known preservative used in the curing process for products such as hams, lunchmeat, bologna and hot dogs. Its effects on meat color and bacterial growth are the basis for its wide spread use in the meat industry. Almost immediately after its addition, the raw meat color changes to a grayish brown. This is a commonly experienced occurrence. The pigment associated with the characteristic brown color of raw cured meat is sometimes referred to as nitric oxide metmyoglobin. It has been shown that nitrite is reduced to nitric oxide gas upon dissolution into meat juices. Nitric oxide is the simplest known thermally stable paramagnetic molecule (i.e. a molecule with an unpaired electron). Upon contact with raw meat in the presence of oxygen, nitrite and nitric oxide turn the color brown by encouraging the disassociation of oxygen from the oxymyoglobin complex. The presence of oxygen oxidizes available nitric oxide to nitrite thus reducing its availability to associate with the myoglobin molecule. During these conversion processes, the heme group losses an electron thus forming brown metmyoglobin.

Upon cooking in the presence of nitric oxide, the globin portion of the metmyoglobin molecule denatures and nitric oxide is attracted to the heme pocket. Since nitric oxide has an unpaired electron, its presence in the heme group encourages the reduction of the iron atom back to its ferrous state. The color changes to pink or maroon depending on the relative amount of myoglobin in the muscle tissue. Cooked cured pork or poultry is pink and cooked cured beef is more of a maroon color.

The denatured (cooked) myoglobin complex with nitric oxide as its ligand is called nitrosohemochrome. In the absence of oxygen this pigment is very stable, however the presence of oxygen eventually oxidizes the nitrosohemochrome and the color changes to grayish brown. As a result, the packaging format of choice for processed meat is vacuum packaging with a high barrier film. This protects the nitrosohemochrome from oxidation by oxygen so that the color is stable for months.

The conventional packaging format used by the retail grocer for fresh meat is to stretch a thin PVC film around a foam tray that supports the product. The film is permeable to oxygen so that the initial color of the meat is bright red. However, the shelf life for the bright red color is only about three days. Thus, this packaging format is undesirable because the color often becomes unacceptable before it can be displayed or sold. As a result, a packaging format that maintains the fresh meat color for a longer period of time is required for the centralized packaging operation.

As an alternative, a high oxygen content-modified atmosphere tray can be utilized. Presently, it is the most commonly used case-ready packaging format. Preformed oxygen barrier trays of this type are filled and sealed on high-speed equipment. The tray is typically either formed of foam with an oxygen barrier layer or of a rigid oxygen barrier plastic. An oxygen rich gas is then flushed into the tray before hermetically sealing a clear film on the top of the tray. In this case, the film used for the lid also has an oxygen barrier film as well as some slight shrink properties. The product is loose inside the package, as the film does not contact the meat such that there is considerable space between the film and the product (headspace) allowing the gas to affect the meat color. Centralized or regional packers currently manufacture whole muscle cuts and ground beef with this type of package. The high oxygen content atmosphere in the package creates a thick bloomed color that lasts longer when compared to meat that is exposed to only atmospheric levels of oxygen. The maximum attainable shelf life is about 14 days for ground beef and 10 days for whole muscle cuts. As it pertains to the modified atmosphere inside these packages, the most common approach is to use a blend that contains 60-80% oxygen and the balance carbon dioxide. The partial pressure of oxygen at the meat surface supplies enough oxygen for enzyme activity as well as reactions with myoglobin. The surface myoglobin pigment is converted to oxymyoglobin before tissue respiration consumes the excess oxygen, and the result is the formation of a thicker layer of surface oxymyoglobin and consequently an extension of display life. However, as the MRA is depleted toward the end of color display life, the thick, oxymyoglobin layer oxidizes to metmyoglobin.

The high oxygen packaging format has additional shortcomings as well. More specifically, the actual display life is much shorter than 14 days because exposure to light actually catalyzes or speeds up the oxidation of the bright red color to the undesirable brown. Further, whole muscle cuts fade more quickly than ground products when exposed to light. As a result, they are priced and printed with a three day sell-by-date at the store level, greatly reducing the available selling time for the meat. Also, oxidative rancidity, core metmyoglobin development and premature browning are quality issues due to the long exposure to an elevated level of oxygen. Furthermore, the characteristic headspace in the individual package takes up room in the box, thereby increasing shipping and storage costs. The headspace is less attractive to the consumer than the tightly wrapped piece of meat.

Recently the use of carbon monoxide was approved as a component of the gas used for the modified atmosphere case ready package. It has been shown to effectively extend the shelf life. As mentioned previously, when carbon monoxide is the ligand of the myoglobin complex, the bright red preferred color develops. This is a very suitable method to extend the color life and as such a number of commercial applications are presently being pursued by the industry. This type of modified atmosphere package will have no oxygen and only 0.4% carbon monoxide to produce the desired effect. A headspace is required by this method and development of the preferred bright red color will be thwarted any place there is contact between the meat and the film. U.S. Patents 4,522,835, 6,113,962, 6,270,829 and 6,521,275 describe methods utilizing carbon monoxide and other gases to cause and maintain the desirable fresh meat color.

Another approach used by some packers to permit centralized packing and have economy of scale is to use the conventional PVC wrapped format with its oxygen permeable film inside another oxygen barrier package. One or more of the conventional packages are over wrapped in a masterpack that is flushed with either a low or high oxygen gas to extend shelf life of the packages contained therein. If low oxygen gas is used, the meat blooms when the individual trays are removed from their masterpack. It does a good job extending color life, but sometimes bloom is difficult because atmospheric levels of oxygen do not adequately penetrate the film that covers the meat surface. The high oxygen gas approach is limited to a regional level of distribution because the shelf life is shorter than the low oxygen modified atmosphere packages described above. As such, the masterpack approach is more commonly used for pork and poultry.

Other packaging formats to enhance the appearance of the packaged food products have also been disclosed by others in the industry. For example, one such format uses carbon monoxide (CO) as part of the gas that is flushed into a secondary or outer master package. The carbon monoxide penetrates the permeable inner package and affects the color of the food product in a manner similar to oxygen, causing the food product to bloom. However, since there is no oxygen present in the gas including the carbon monoxide that is flushed into the package to oxidize the myoglobin, the red color developed by carbon monoxide is more stable. Therefore, it lasts longer that the red color caused by oxygen. This extension of the time before the red color turns brown consequently increases the attractiveness of the food product to a consumer and the likelihood of the sale of the product to a consumer. However, the oxygen free/carbon monoxide format requires special packaging equipment and an additional outer package to accomplish the desired effect.

In addition to the previously mentioned formats, a variety of other additives and gases have been used and disclosed in prior art to enhance or extend the bacteriological and color shelf life of case ready fresh meat. For example, U.S. Patent 4,683,139 describes a method to enhance and maintain fresh meat color for up to two weeks. The method utilizes direct additives that include phosphate salts, ascorbic acid, or alkali metal salts, and a sequestering agent, such as citric acid, in combination with a modified package atmosphere. This patent, and references cited therein, refers to stabilizing the color of fresh meat that is caused by the presence of oxygen.

Several patents also describe the use of pressurized gases as a means to treat meat prior to packaging so as to intensify and stabilize the preferred red color. U.S. Patent 6,716,464 discloses use of the oxygen gas in this manner. Again, these methods emphasize the importance of the red color of fresh meat.

Other methods that actively exchange the package atmosphere to cause the meat color to change are described in U.S. Patent 5,481,852, and U.S, Patent 5,989,613. The display life of the packages formed by these methods is very short and oxygen is used as the agent to cause the color change. Similarly, the method described in U.S. Patents 5,866,184 and 5,711,978 uses perforations in the tray or lid of a modified atmosphere package to allow for a passive ingress of oxygen into meat surface at a time just prior to retail display. U.S. Patents 5,759,650, 5,591,468 and 4,055,672 describe methods where an exterior barrier film layer is removed leaving behind a permeable layer of film. When the barrier layer is removed just prior to display, atmospheric oxygen diffuses into the meat surface thereby causing the preferred color change. Further, U.S. Patents 5,989,610, 5,597,599 and 5,352,467 describe the use of a variety of gases and additives. All of these methods are attempts to cause and maintain the oxygenated (red) form of the meat pigment for an extended period of time.

U.S. Patents 6,046,243, 5,965,264 and 5,888,528 relate to the encapsulation and subsequent release of biocidal gases for the purpose of retarding, controlling, killing or preventing microbiological contamination. Nitrite and nitric oxide are mentioned in the patents as agents to achieve these specific effects. Applications to meat packaging are also mentioned more specifically with regard to chlorine dioxide as the active antibacterial agent. U.S. Patent Application 2004/0137202 discloses a method for coating a contact film surface of a food wrap with active ingredients or agents that carry out a variety of secondary effects or functions. Nitrite is mentioned in this method for a preservative function

Further, several patents disclose use of nitrite in the packaging material as an inhibitor of corrosion. They include U.S. Patent Nos. 6,533,962,6,465,109, 6,033,599 and 5,281,471. U.S. Patent No. 5,271,471 is a broad disclosure which also mentions vacuum packaging and packaging food.

WO-A-2004/039683 discloses a multifunctional food wrap comprising a material web, an adhesive, and at least one secondary function. The material web is provided with a plurality of protrusions integral with the material web and haying spaces therebetween. The adhesive is disposed within the spaces between the protuberances. The at least one secondary function may be a chemical means or a physical means and disposed within the adhesive, the material, web, and/or the protuberances.

In US-A-2001/0055640 a fresh food item is wrapped in a packaging material comprising a substrate suitable for contact with food and a food treatment layer comprising a predetermined amount of edible adhesive applied to a food contacting surface of the substrate and a curing or marinating agent mixed in, retained and calibrated by the adhesive.

WO-A-03/009709 discloses a method of manufacturing a modified atmosphere package which comprises supplying a first package including a non-barrier portion substantially permeable to oxygen. A retail cut of raw meat is placed within the first package and the first package is sealed. A second package substantially impermable to oxygen is supplied. The first package is covered with the second package without sealing the second package so as to create a pocket between the first and second packages. A mixture of gases is supplied into the pocket.

EP-A-0473091 discloses an extruded film article, such as a bag, which comprises a blend of a thermoplastic polymer such has ethylene vinyl acetate and an olefinic oxide, polymer such as poly (ethylene oxide), with a modifier such as liquid smoke absorbed in the blend. The modifier is transferable from the film to a receiving surface such as a food body in fluid transfer relationship with the film.

An English abstract of JP-A-57-155975 refers to a food, especially a processed meat product such as ham, sausage, etc. which is wrapped with a film of a hardly soluble pullulan which contains natural or synthetic colorant, flavor, seasoning component, etc., and endures the process of packaging raw meat or raw meat product at room temperature, but dissolves at a temperature of normal boiling process.

WO-A-96/14760 discloses a method of extending the shelf-life of fresh foods, such as meat, poultry, seafood, vegetables and fruit, which uses a sheet comprising film with a layer of adhesive and a curing or marinating agent attached to the film by the adhesive. The food is sealed in the sheet, with the curing or mannating agent in intimate contact with the food, and the package is maintained at a temperature of about 0° C until the food is substantially cured or marinated.

US-A-2925346 discloses a process of packaging cured meat products to provide an attractive, bright colored product and inhibit color degradation in said product. The process placing the product in a container, removing oxygen from the product and container, backfilling the container with a gaseous oxide of nitrogen, and thereafter sealing said container.

Prior technologies relate to methods of affecting meat color using passive or active treatments of the meat with gases or chemicals. Some of these methods also employ physical properties of the package to assist in transforming the color of fresh meat which include peelable barriers, perforations, and packages with multiple film layers. However, none of these technologies teach us anything about selecting for the preferred red color of fresh meat using nitrite, nitrate or nitric oxide. Furthermore, none of these methods are able to create and maintain the preferred red color of fresh meat in a vacuum package.

Therefore, it is desirable to develop a novel packaging format that creates and maintains the red display color of the meat food product and has the appearance that more closely resembles the packaging format traditionally offered to the consumer.

### SUMMARY OF THE INVENTION

It is a primary object of the present invention to cause and maintain the preferred red color on the surface of fresh meat. The color of interest is that typically associated with fresh meat that has been exposed to oxygen to create the oxygenated red form of the meat pigment. The present method achieves this goal by using a nitrogene-oxide containing compound, for example a nitrite or nitrate compounds in a packaging format that significantly extends the desirable color of a meat food product. More specifically, the present invention causes and maintains the preferred red color by using a nitrogen-oxide containing compound, for example a nitrite or nitrate in a manner that allows reaction with the myoglobin pigment of meat to form nitroxymyoglobin as defined herein.

The present invention provides a food packaging film as claimed in claim 1, to which reference should now be made. Preferred but optional features of the film are set out in clams 2 to 10. The invention also provides a food packaging container according to claim 11. and a food packaging method according to claim 14, the container and method both employing a film according to the invention. Claims 12 and 13 and 15 to 19 set out preferred but optional features of the container and methods, respectively. Claim 20 recites a vacuum packaged meat provided by the invention and employing a film according to the invention.

The present method accomplishes the objectives by creating conditions inside the meat food package that allow nitroxymyoglobin to form. More specifically, it has been found that when raw meat is exposed to sodium nitrite after vacuum packaging in a barrier film, its color changes from red to brown within minutes. However, surprisingly and unexpectedly after a period of time (1-5 days) the color changes back to bright red. Thus, during this time period the predominate pigment on the meat surface changes from oxymyoglobin to metmyoglobin to nitroxymyoglobin. This is because the elimination of oxygen and reduction of metmyoglobin allow for nitroxymyoglobin to form. The vacuum that is applied during the packaging step is not able to eliminate oxygen that absorbed into the meat surface because it was bound into the heme pocket of the myoglobin complex. However, the OCR and MRA, of the meat are able to eliminate this oxygen and reduce the remaining metmyoglobin pigments. Several days may be needed to allow enough time for this change to occur. Once the metmyoglobin pigments are reduced, nitroxymyoglobin pigments begin to dominate and the color on the meat product surface turns to the preferred bright red.

It is another object of the present invention to create conditions that allow the nitroxymyoglobin to form on the visible surfaces of meat without extending throughout the meat's thickness. More specifically, a nitrite or nitrate is sprayed onto or incorporated into the packaging film that forms the sealant layer for the film that is positioned directly over and in contact with the food product. The amount of nitrite to affect the efficient conversion of surface deoxymyoglobin to nitroxymyoglobin is related to the concentration of myoglobin molecules that are naturally present in the meat product being packaged. This amount varies greatly between meat types with beef and lamb being greater than pork and poultry. Furthermore, there are variances in the myoglobin molecule concentration between individual animals, and their age, sex or breed. Individual muscle type and slaughtering conditions further affect the rate and efficiency of the conversion of the myoglobin molecules. Thus, the present invention is utilized to cause nitroxymyoglobin formation only on the viewing surface of the fresh meat leaving the center of the product in its natural myoglobin state. Specifically, the desired depth of improved color penetration provided by the method is preferably less than about 10mm (0.375 inch), and more preferably less than about 6mm (0.25 inch).

Numerous other objects, features and advantages of the present invention will be made apparent from the following detailed description taken together with the drawing figures.

### BRIEF DESCRIPTION OF THE DRAWINGS

The drawings illustrate the best mode currently contemplated as practicing the present invention.

In the drawings:
FIG. 1 is an isometric view of a package incorporating the packaging film containing an oxide of nitrogen;
FIG. 2A is a cross-sectional view of the packaging film FIG. 1 where the nitrogen-containing compound is sprayed onto the film;
FIG. 2B is a cross-sectional view of the packaging film of FIG. 1 where the oxide of nitrogen is incorporated into the film; and
FIG. 3 is an isometric view of a vacuum package incorporating the packaging film of the present invention.

### DETAILED DESCRIPTION OF THE INVENTION

The undenatured (raw) nitric oxide myoglobin complex is of major significance to the present inventive method and packaging film. The current scientific teachings describe "nitric oxide metmyoglobin" as the pigment that forms from the exposure of raw meat to nitrite. Little research has been done on the reduced form of this pigment. Terminology for the pigment is inconsistent. Researchers refer to it as "nitric oxide myoglobin", "nitrosomyoglobin", or "nitrosylhaemochromagen" among others. In order to avoid confusion, in this writing the undenatured and reduced form of the nitric oxide myoglobin complex will be referred to as nitroxymyoglobin.

As previously mentioned, the viewing surface of untreated fresh meat is actually the combination three forms of myoglobin. Pigments on the surface and subsurface contribute to the color. When meat is exposed to the atmosphere, oxymyoglobin dominates the relative percentage of the pigments and the color is a bright red. When the raw fresh meat is exposed to nitric oxide, metmyoglobin dominates on the surface and the color is brown. However, below the surface the meat color is dull red and deep in the core the color is bright red. The perceived color of nitrite treated meat is a combination of four pigments that include nitroxymyoglobin. If no oxygen is present and the metmyoglobin is reduced to deoxymyoglobin, the nitroxymyoglobin form will begin to outnumber the other three forms. Conditions have to be just right for all of the metmyoglobin to be reduced. The results of experiments with the method of the present invention suggest that the color of nitroxymyoglobin is the same as oxymyoglobin and carboxymyoglobin. Thus, when nitroxymyoglobin is the predominant form of the myoglobin pigment on the meat surface, the perceived color is bright red.

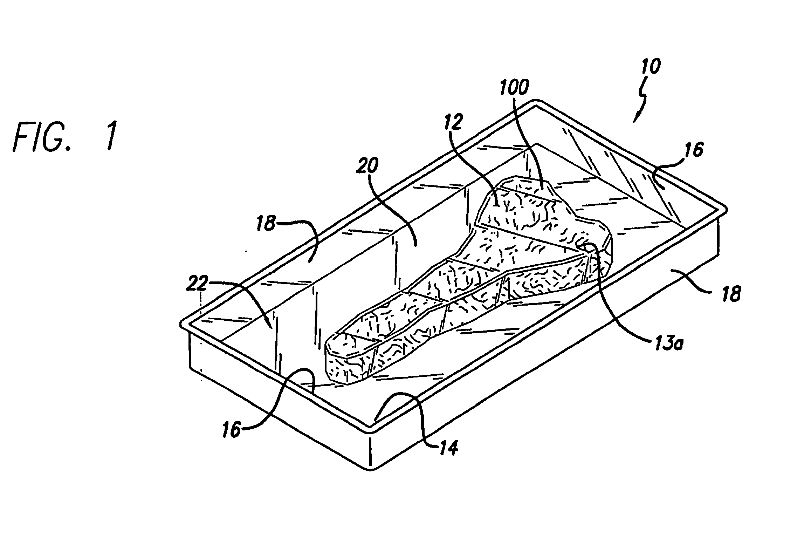

With reference now to the drawing figures in which like reference numerals designate like parts throughout the disclosure, a food package according to the present invention, such as a tray, is illustrated in FIG. 1 generally at 10. The package 10 can have any desired shape depending upon the size and configuration of the food product 12 having a viewing surface 100 to be contained therein. In accordance with this invention, the method may advantageously be employed with any myoglobin or hemoglobin containing tissue and has special relevance to food products harvested from: livestock such as beef, pork, veal, lamb, mutton, chicken or turkey; game such as venison, quail, and duck; and fish, fishery or seafood products. The phrases "meat food product" or "food product" used throughout this application refer to any of the above referenced types of meat. The meat can be in a variety of forms including primals, subprimals, and retail cuts as well as ground, comminuted or mixed.

Furthermore, the package 10 can be formed of any number of suitable materials, such as foam and plastic materials, which are well known for use in forming food packages or trays 10. Indeed the film alone may be used to package the food by means of a pouch or bag which is vacuum packed about the meat, and the film may be heat shrinkable or not. In a particular preferred embodiment, the food product 12 is a meat such as fresh red meat having a top meat surface 13a, and opposing bottom surface(not shown) connected by a continuous meat side wall surface 13b which is packaging by a film according to the present invention. In a preferred package, food is vacuum skin packaged in a tray such as package tray 10 which includes a bottom wall 14, a pair of side walls 16 extending upwardly from the bottom wall 14, and a pair of end walls 18 extending upwardly from the bottom wall 14 and connected to the side walls 16. The respective walls 14, 16 and 18 forming the package tray 10 form an enclosure 20 within which the food product 12 can be positioned. The food product 12 is retained within the package tray 10 by a packaging film 22 positioned over the food product 12 and tray 10, and secured at each end to the tray 10. The package film 22 can be secured to the package tray 10 in any suitable manner, such as by heat shrinking, heat sealing, an adhesive or any other suitable method.

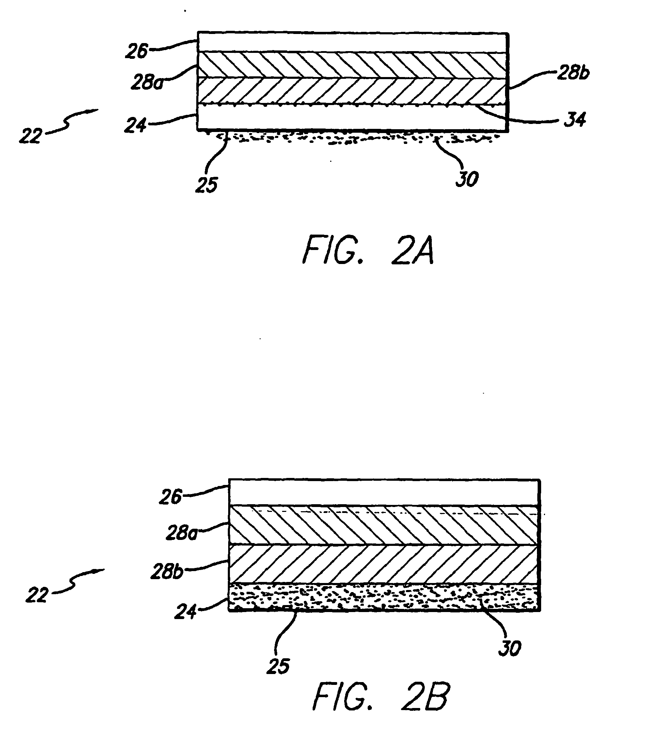

Referring now to FIGS. 2A and 2B, the packaging film 22 can be formed from any suitable and preferably at least generally transparent packaging material, and can be formed to have one or more layers. In a preferred embodiment, the film 22 includes a number of layers to enable the film 22 to function movably for its intended purposes. In a particularly preferred embodiment, the packaging film 22 includes an inner sealing layer 24 having a meat contact surface 25, and an outer layer 26. Additionally, one or more inner layers 28a and 28b can be incorporated into the packaging film 22. The invention contemplates use of films having 1, 2, 3, 4, 5, 6, 7, 8, 9, or more layers.

The sealing layer 24 includes an amount of an oxide of nitrogen, a nitrite or a nitrate compound 30 that is used to control the exhibited color of the food product 12. Then nitrate or nitrite compound 30 is applied to or incorporated in the formation of the layer 24, and optionally layers 26 and 28. The compound 30 can be applied to the meat contact surface 25 of layer 24 or incorporated into the sealing layer 24 in any conventional manner, so long as it is evenly dispersed over the contact surface 25 of the layer 24 and/or throughout the entire layer 24 to enable any length of film 22 incorporating the layer 24 to include approximately similar amounts of the compound 30 within the sealing layer 24 for a uniform transfer to meat via surface 25. In the embodiment where the compound 30 is incorporated within the sealing layer 24, the thickness of the sealing layer 24 is adjusted to optimize the migration of the compound 30 from layer 24 upon contact with the top and side surfaces 13a and 13b of food product 12. The layer thicknesses and/or amount of compound 30 for the layer 24 can be adjusted so as to vary the speed of the migration of the compound 30 out of the layer 24, as desired. Also, the film 22 may also be formed with an adhesive layer 34 disposed between layers 24 and 28 of the film 22. The adhesive 34 may contain the nitrogen-containing compound 30 in order to release the compound 30 through the layer 24 in a controlled manner depending upon the materials used in forming the layer 24.

### EXPERIMENTAL

The packaging film 22 of this invention was developed using experiments in which a variety of chemicals were sprayed onto raw meat prior to vacuum packaging. The chemicals used were various reducing agents and oxidizing agents, which were tested in an attempt to affect the myoglobin reducing activity (MRA) and oxygen consumption rate (OCR) of the raw meat. The objective was to stabilize the respiratory conditions of the meat so as to retard myoglobin oxidation after exposure to oxygen. Commonly used meat additives were evaluated as well. The chemicals included a variety of phosphates, sulfites, acids and alkalis, salts, different forms of ascorbic acid, antioxidants, oxygen sequestering agents, plant extracts such as rosemary extract, and others that are beyond the scope of, and not necessarily related to this disclosure.

In the course of these experiments, sodium nitrite and sodium nitrate were tested. It was found that very small amounts of nitrite or nitrate affected the color of vacuum packaged meat. More specifically, when nitrite was coated onto the inner contact film surface of a vacuum package, the color would turn brown immediately after evacuating oxygen away from the viewing surface. However, unexpectedly and surprisingly in some experiments the preferred red color gradually displaced the brown color and remained stable for several months.

As a result of the testing performed, it is believed, without wishing to be bound by the belief, that nitric oxide (NO) gas forms as a result of the reduction of the nitrite on the package and this gas affects the color of the meat food product. The nitric oxide gas is believed to have a similar effect on bloom as carbon monoxide gas. Trials where meat food products were contacted with nitrite found that the bloomed color occurs only in the absence of oxygen. It is the initial small amount of residual oxygen that causes initial browning of the food product. It was found that when residual oxygen is high, a longer time is required for the initial brown color to be replaced by the preferred red color. In the initial experiments, five days were needed for the red color to fully develop. The freshness of the muscle and the specific cut affects this "bloom time" as well. Also, when a poor barrier film is used for the packaging material, the time necessary to achieve the desired bloom is extended. This is because oxygen migrates through the film causing and maintaining the brown or dark color of the meat inside.

In efforts to shorten the bloom time, extended vacuum times were used during packaging of the food product. It was observed that when a high vacuum level was applied, the bloom time decreased. With higher vacuum levels, it was also observed that when the food product surface was sprayed, dusted or otherwise coated with a water-based solution of nitrite, the bloom time could be reduced to approximately 60 hours. When the nitrite solution was sprayed, dusted or otherwise applied onto the inside surface of the package and allowed to dry before packaging the bloom time was reduced to approximately 48 hours. Additionally, it was observed that in general bloom time is shorter for pork than beef. Less than 24 hours was required for pork. Enhanced pork (pork with about 10% or less added mixture of water, salt and phosphate) exhibited a shorter bloom time than non-enhanced pork. Beef that was more than 20 days postmortem appeared to require the longest bloom time of up to 72 hours. On the other hand, 10 day postmortem beef bloomed in 24 hours. This illustrated that the higher oxygen consumption rate of fresher meat is important to minimize bloom time.

The red color developed by the application of the nitrite or nitrate in this manner is very stable, and does not turn brown during cooking. The uncontrolled addition of nitrite or nitrate can be a problem in that a visually perceptible "well done" indication of cooking for the food product is hard to achieve when the nitric oxide gas (or color changing material) penetrates intact muscle or ground meat to depths that almost reach the center of the individual portion. Therefore, it is important to control the level of nitrite utilized so that only enough is used to achieve a very shallow penetration by the color effect (believed to be causes by nitric oxide penetration) of the viewing surface of the food product. As the depth of the nitric oxide gas penetration increases, the internal color is no longer affected by cooking temperatures that normally turn the color brown or grey. When this occurs it is not possible to cook the product to the normal appearance of a well-done level. Thus, it is important to minimize the amount of nitrite exposure to the meat-viewing surface.

This objective can be achieved by adding nitrite to the contact surface 32 of the sealing layer 24 or the packaging film 22. After vacuum packaging, the film 22 contacts the viewing surface 100 of the food product 12. Nitrite from the film surface 24 dissolves into the meat juices and breaks down into nitric oxide to achieve the desired result. Best results occur when the level of nitrite is controlled so that only enough nitric oxide is released to affect the pigments within the viewing surface 100 of the food product 12. The nitrite level required for this result is less than one-tenth (1/10) of the nitrite commonly used for curing. In fact, it is part of the focus of the present method to controllably deliver only enough nitric oxide to affect the viewing surface 100 of the meat 12. Nitrite levels typically associated with curing are so high that their effect on the color lasts after cooking. In a preferred embodiment the level of nitrite that can be used in the present inventive method is so small that in most embodiments it is not analytically detectable as nitrite or nitrate in the finished product by commonly used test methods. Furthermore, the amount is insufficient to effectively cure the entire product 12.

More specifically, in one example of the present invention the immediate 0.25 inches of beef that was exposed to the film containing the proper level of nitrite was tested for nitrite. It is an important observation that after short (about 48 hours) and long (about 7-10 days) periods of exposure, no nitrite was measured in the meat (minimum detection level = 2.0 ppm). Thus, a very small amount of sodium nitrite is needed for its desired affect. While the preferred depth of penetration of the nitrite is about 0.25 inch (∼6 mm), it is also acceptable for the nitrite to penetrate deeper into the viewing surface to a maximum of about 0.375 inch (∼10 mm).

In earlier studies when nitrite was coated onto the film surface, concentrations of levels higher than 20 ppm were observed. At these levels, the nitrite appeared to penetrate the viewing surface very deeply. Upon cooking it was not possible to achieve a "well done" appearance level of odor in the meat. The pink color created from the nitroxymyoglobin was present in the core of the meat cut. These trials evaluated film that contacted both sides of the cut of meat. Subsequent evaluations with a tray that did not contain nitrite on the meat contact surface still found a significant depth of penetration when the higher levels of nitrite were evaluated. However, when the 20,000 ppm sealant film was used on the skin pack package, the penetration was less than 3/16^{th} inch. It was found that at this level, subsequent cooking performance is similar to the control after 30 days of refrigerated storage prior to cooking. Both the core and surface of the meat browned during cooking. A thin layer of pink color often remains between the surface and core.

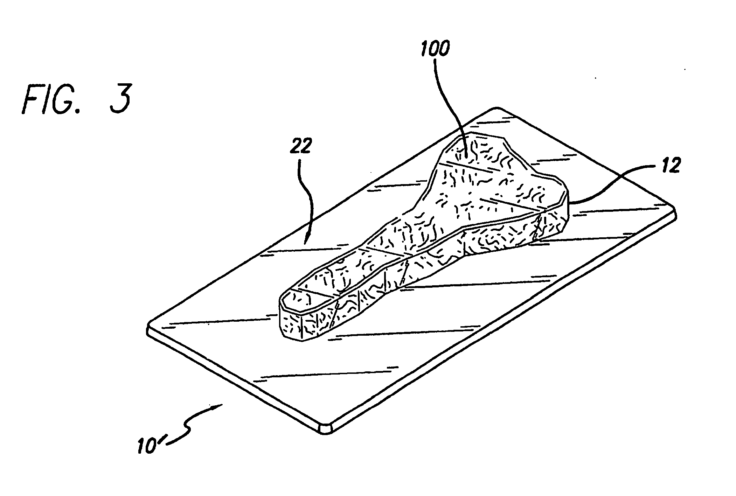

The preferred embodiment of this method is to use the treated film 22 for a vacuum package 10', as shown in FIG. 3. During vacuum packaging all air is removed from the inside of the package 10' so that the film 22 intimately contacts top surface 13a and side surface 13b i.e. the viewing surface 100 of the meat 12. Best results are achieved when the contact packaging film 22 effectively prevents the ingress of oxygen from the atmosphere after packaging. This is because small amounts of oxygen accelerate unacceptable discoloration as described previously. Thus, it is desirable to minimize the time of exposure by the raw meat to oxygen during the cutting or grinding procedures that occur prior to packaging. Residual oxygen that absorbed into the meat surface during the cutting and grinding operations is eliminated by the postmortem respiratory activities of the raw meat tissue. Since time is required for this to occur, the method works best when the nitrite dissolution into the meat juices occurs gradually. It was found that incorporating the nitrite compound 30 into the thin polymer sealing layer 24 of a multi layer packaging film 22 gave better results than coating or dusting the nitrite compound 30 onto the inner film surface 24 where all of the compound 30 is immediately available to the viewing surface 100. In one embodiment of the invention encapsulating the nitrite compound 30, or otherwise protecting it in a manner that controls or delays the release of nitric oxide, is contemplated as beneficial to the present method.

One of the best appearing types of vacuum packages is referred to in the industry as a "skin pack". This type of package generally uses a rigid tray that supports the product. The clear top film is formed around the product during the vacuum packaging procedures. The thin film forms a skin around the entire viewing surface of the product. It appears as though there is no film on the product surface. Thus, an excellent fresh meat appearance can be achieved when this method is used with a skin packaging film.

It is contemplated that oxygen barrier trays with or without the nitrite or nitrate containing surfaces may be employed with packaging films according to the present invention. The oxygen barrier tray may keep a fresh purple color on the meat to tray contact surface which will bloom red after unwrapping and exposure to oxygen or the tray may contain nitrite or nitrate on its surface as is done with the inventive film.

Another application of the present method is to utilize it with the vacuum packaging of cured processed meats such as ham, lunchmeat, bologna and hot dogs. They are most commonly vacuum packaged with barrier films to maintain their characteristic color. This color is much more stable than fresh meat and typically lasts more than 60 days. When color fading occurs, it is attributable to an oxidation of the nitosohemachrome pigment. This most likely occurs because of the depletion of residual nitrite and ingress of very small amounts of oxygen through the packaging film. The present method advantageously maintains a residual nitrite level at the film 22 to meat contact surface thereby extending color life.

To control the rate and amount of nitric oxide gas that releases from the internal film surface after packaging, impregnating or permeating the nitrite or nitrate compound 30 in the polymer that comprises the film contact surface layer 24 would enable a slow and controlled release of the compound. Polymer films for this purpose were prepared using 0, 1,000, 5,000, 10,000, 20,000 and 25,000 parts per million of sodium nitrite incorporated into surface layer 24 (based on the weight of the surface layer 24). It was found that even the lowest amount of nitrite tested induced the preferred red color formation in the food product. Further, different types of food products showed different results with different levels of nitrite present in the film 22. For example, pork showed the best results with a film having 10,000 ppm of nitrite, where beef had the best results with a 20,000 ppm nitrite level in the film 22. Thus, the level of nitrite needed in the film 22 to produce the desirable and stable color is related to the level of myoglobin present in the food product.

Although the description of the present invention has been described with respect to nitrite is will be appreciated that the invention contemplated use of a sodium or potassium salt of nitrite or nitrate or blends thereof and these commonly available materials or less common oxides of nitrogen may be usefully employed in the present invention.

Preferably, the surface of the film will have 0.01 mg per square inch (0.0155 g m⁻²) or less, and more preferably 0.0077 mg per square inch (0.0119' g m⁻²) or less, of the nitrogen oxide agent, for example nitrite, to avoid an undesirably deep penetration of the agent into a meat during contact. This amount minimizes haze to produce a beneficially transparent package. Beneficially, the nitrogen-oxide containing film will have good optical properties and be transparent. Advantageously, the film will preferably have a haze value of less than 25 percent, preferably less than 20 percent, and more preferably less than 15 percent as measured by ASTM D-1003 52. Preferably, the surface will have at least 0.0008 mg per square inch (0.00124 g m⁻²) and beneficially at least 0.0016 mg per square inch (0.00248 g m⁻²) in a transferable amount in order to effect a suitable color change within 96 hours after contact with an uncooked meat in an oxygen barrier vacuum packaged environment

Advantageously, for use with beef an amount of at least 1 ppm (based on the weight of the beef) available on the nitrite or nitrate treated surface of the film may be advantageously used. Similarly for pork only 0.5 ppm (based on the weight of the pork) may be used to similar effect. It has been found that film containing 10,000 ppm. (0.106 mg per square inch (0.164 g m⁻²) of nitrite (in the form of sodium nitrite) after 48 hours will make available for transfer 0.0017 mg per square inch (0.00264 g m⁻²) to the surface of meat. At 20,000 ppm (0.211 mg/square inch (0.327 g m⁻²) 0.0077 mg/ square inch (0.0119 g m⁻²) is available for transfer at 48 hours.

Although the description of the invention above relates to its application to fresh red meat, this method also offers benefits when applied to fresh fish. More specifically, when the packaging film and method is applied to vacuum packaged fresh fish, it improves its bacteriological safety. Currently the safety of a low oxygen fresh fish package is at more risk than an oxygen permeable or high oxygen content package because low content oxygen packaging creates conditions that favor the growth of certain bacteria, such as Clostridium botulinum. The higher oxygen content packaging is preferred for this reason and is actually mandated by regulatory agencies. However, the presence of increased levels of oxygen also allows the faster growing bacteria to degrade the product more quickly. Nitrite or nitrate and nitric oxide gas inhibit the ability of the Clostridium bacteria to produce its toxin. Therefore, its presence at the surface of a vacuum package reduces this risk and extends the bacteriological shelf life for the fish.

Food products, such as pork, beef, etc., that have been enhanced also work well with the method and film of the present invention. More specifically, common ingredients of enhancements that include antioxidants such as rosemary extract or erythorbate help to accelerate the break down of nitrite to nitric oxide. Other ingredients of these types of enhancements such as sodium phosphate help to stabilize the myoglobin pigment and elevate the oxygen consumption rate of the meat tissues.

Various alternative embodiments of the present invention are contemplated as being within the scope of the following claims particularly pointing out and distinctly claiming the subject matter regarded as the invention.

## Claims

1. A food packaging film (22) for use in creating and stabilizing a desirable color on a viewing surface (100) of a raw myoglobin-containing food product (12) without deleteriously affecting the subsurface color of the food product, wherein the film is a barrier to oxygen and comprises:
a) a food contact layer (24) capable of contacting the food product held within a package formed with the film, and
b) a nitrogen oxide-containing compound (30) being in and/or distributed on the surface of the food contact layer in an amount of 0.21 mg in⁻² (0.327 g m⁻²) or less;
wherein said food packaging film is not a food wrap comprising:
c) a material web having a first active side and a second side, said material web comprising a plurality of protrusions, said protrusions being integral with said first active side and said second side, said protrusions having spaces therebetween; and
d) an adhesive disposed upon said first active side of said material web within said spaces between said protrusions.

2. A packaging film according to claim 1, wherein the nitrogen oxide-containing compound forms nitric oxide when contacted with the food product.

3. A packaging film according to claim 2, wherein the nitrogen oxide-containing compound is a nitrite.

4. A packaging film according to claim 3, wherein the nitrogen oxide-containing compound is a sodium nitrite.

5. A packaging film according to claim 1, wherein the nitrogen oxide-containing compound is applied to the surface (25) of the food contact layer.

6. A packaging film according to claim 1, wherein the nitrogen oxide-containing compound is incorporated into the food contact layer.

7. A packaging film according to claim 1, having at least one additional layer (28b, 28a, 26) positioned on the food contact layer.

8. A packaging film according to claim 7, wherein the said at least one additional layer is an adhesive (34).

9. A packaging film of claim 8, wherein the adhesive comprises the nitrogen oxide-containing compound.

10. A food packaging film according to claim 1, wherein the film is adapted to vacuum package the food item.

11. A food packaging container comprising a film (22) as claimed in any preceding claim and a tray (14, 16, 18) adapted to hold a food item (12) therein, wherein the tray is a barrier to oxygen and the film is positioned over the tray to maintain the food item therein.

12. A food packaging container according to claim 11, wherein the film is used to vacuum package the food item in the tray and substantially eliminate the presence ofoxygen between the film and the tray.

13. A food packaging container according to claim 13, wherein the tray comprises the nitrogen oxide-containing compound (30).

14. A method ofpackaging a food item (12) to create and stabilize a desirable color on a viewable surface (100) of the food item without deleteriously affecting the subsurface color of the food item, comprising the steps of: a) providing a film (22) as claimed in any preceding claim and b) contacting the film with the food item to form a package (10) for the food item.

15. A method according to claim 14, including the step of evacuating oxygen from between the film and the food item after contacting the film with the food item.

16. A method according to claim 15, further comprising the step of introducing other non-oxygen gases or mixture of non-oxygen gases between the film and the food item after evacuating the oxygen.

17. A method according to claim 14, wherein the step of providing a film comprises applying the nitrogen oxide-containing compound to a contact surface of the film which contacts the food item.

18. A method according to claim 14, including the step of evacuating oxygen from between the film and the food item.

19. A method according to claim 14, including the step of treating the food item with a nitrogen oxide-containing compound prior to contacting the film with the food item.

20. A vacuum packaged meat comprising an uncooked meat product (12) vacuum packaged in a film or container as claimed in any preceding claim, wherein the film (22) or container has a first oxygen barrier polymeric layer and a second surface layer (24) containing a nitrogen oxide-containing compound (30) selected from sodium nitrite, sodium nitrate, potassium nitrite, potassium nitrate and blends thereof, in an amount sufficient to transfer between 0.0008 and 0.016 milligram per square inch (0.00124 g m⁻² and 0.0248 g m⁻²) to the uncooked meat product within 96 hours.

## Patentansprüche

1. Lebensmittelverpackungsfolie (22) zur Verwendung bei der Erzeugung und Stabilisierung einer erwünschten Farbe an einer Sichtfläche (100) eines rohen myoglobinhaltigen Lebensmittelprodukts (12) ohne nachteilige Beeinflussung der suboberflächlichen Farbe des Lebensmittelprodukts, wobei die Folie eine Barriere gegenüber Sauerstoff darstellt und umfasst:
a) eine Lebensmittelkontaktlage (24), welche mit dem innerhalb einer mit der Folie gebildeten Verpackung aufgenommenen Lebensmittelprodukt in Kontakt bringbar ist, und
b) eine stickstoffoxidhaltige Verbindung (30) welche in und/oder verteilt auf der Oberfläche der Lebensmittelkontaktlage in einer Menge von 0,211 mg in⁻² (0,327 g m⁻²) oder weniger vorliegt; wobei die Lebensmittelverpackungsfolie keine Lebensmittelumhüllung ist, welche umfasst:
c) eine Materialschicht mit einer ersten aktiven Seite und einer zweiten Seite, wobei die Materialschicht eine Mehrzahl von Vorsprüngen umfasst, wobei die Vorsprünge integral mit der ersten aktiven Seite und der zweiten Seite ausgebildet sind, wobei die Vorsprünge dazwischenliegende wischenräume aufweisen; und
d) ein Adhäsivmaterial, welches auf, der ersten aktiven Seite der Materialschicht innerhalb der Zwischenräume zwischen den Vorsprüngen angeordnet ist.

2. Verpackungsfolie nach Anspruch 1, wobei die stickstoffoxidhaltige Verbindung bei Inkontaktkommen mit dem Lebensmittelprodukt Stickstoffmonoxid bildet.

3. Verpackungsfolie nach Anspruch 2, wobei die stickstoffoxidhaltige Verbindung ein Nitrit ist.

4. Verpackungsfolie nach Anspruch 3, wobei die stickstoffoxidhaltige Verbindung ein Natriumnitrit ist.

5. Verpackungsfolie nach Anspruch 1, wobei die stickstoffoxidhaltige Verbindung auf die Oberfläche (25) der Lebensmittelkontaktlage aufgebracht ist.

6. Verpackungsfolie nach Anspruch 1, wobei die stickstoffoxidhaltige Verbindung in die Lebensmittelkontaktlage inkorporiert ist.

7. Verpackungsfolie nach Anspruch 1 mit mindestens einer zusätzlichen Lage (28b, 28a, 26), welche auf der Lebensmittelkontaktlage positioniert ist.

8. Verpackungsfolie nach Anspruch 7, wobei die mindestens eine zusätzliche Lage ein Adhäsivmaterial (34) ist.

9. Verpackungsfolie nach Anspruch 8, wobei das Adhäsivmaterial die stickstoffoxidhaltige Verbindung umfasst.

10. Verpackungsfolie nach Anspruch 1, wobei die Folie dazu ausgebildet ist, den Lebensmittelartikel vakuumzuverpacken.

11. Lebensmittelverpackungsbehälter, umfassend eine Folie (22) nach einem der voranstehenden Ansprüche und ein Tray (14, 16, 18), in welchem ein Lebensmittelartikel (12) aufnehmbar ist, wobei das Tray eine Barriere gegenüber Sauerstoff darstellt und wobei die Folie über dem Tray positioniert ist, um den Lebensmittelartikel darin zu halten.

12. Lebensmittelverpackungsbehälter nach Anspruch 11, wobei die Folie dazu verwendet wird, den Lebensmittelartikel in dem Tray vakuumzuverpacken und das Vorhandensein von Sauerstoff zwischen der Folie und dem Tray im Wesentlichen zu eliminieren.

13. Lebensmittelverpackungsbehälter nach Anspruch 13, wobei das Tray die stickstoffoxidhaltige Verbindung (30) umfasst.

14. Verfahren zum Verpacken eines Lebensmittelartikels (12), um eine erwünschte Farbe an einer Sichtfläche (100) des Lebensmittelartikels ohne nachteilige Beeinflussung der suboberflächlichen Farbe des Lebensmittelartikels zu erzeugen und zu stabilisieren, umfassend die Schritte: a) Bereitstellen einer Folie (22) nach einem der voranstehenden Ansprüche und b) Inkontaktbringen der Folie mit dem Lebensmittelartikel, um eine Verpackung (10) für den Lebensmittelartikel zu bilden.

15. Verfahren nach Anspruch 14, umfassend den Schritt des Evakuierens von Sauerstoff zwischen der Folie und dem Lebensmittelartikel nach Inkontaktbringen der Folie mit dem Lebensmittelartikel.

16. Verfahren nach Anspruch 15, ferner umfassend den Schritt des Einführens von anderen Nicht-Sauerstoffgasen oder Mischungen von Nicht-Sauerstoffgasen zwischen der Folie und dem Lebensmittelartikel nach Evakuieren des Sauerstoffs.

17. Verfahren nach Anspruch 14, wobei der Schritt des Bereitstellens einer Folie umfasst: Aufbringen der stickstoffoxidhaltigen Verbindung auf eine Kontaktoberfläche der Folie, welche mit dem Lebensmittelartikel in Kontakt kommt.

18. Verfahren nach Anspruch 14, umfassend den Schritt des Evakuierens von Sauerstoff zwischen der Folie und dem Lebensmittelartikel.

19. Verfahren nach Anspruch 14, umfassend den Schritt des Behandelns des Lebensmittelartikels mit einer stickstoffoxidhaltigen Verbindung vor Inkontaktbringen der Folie mit dem Lebensmittelartikel.

20. Vakuumverpacktes Fleisch, umfassend ein ungekochtes Fleischprodukt (12), vakuumverpackt in einer Folie oder einem Behälter nach einem der voranstehenden Ansprüche, wobei die Folie (22) oder der Behälter aufweist: eine erste polymere Sauerstoffbarrierelage und eine zweite Oberflächenlage (24), welche eine stickstoffoxidhaltige Verbindung (30), ausgewählt aus Natriumnitrit, Natriumnitrat, Kaliumnitrit, Kaliumnitrat und Mischungen hiervon, in einer Menge enthält, die ausreichend ist, um zwischen 0,0008 und 0,016 Milligramm pro Quadratzoll (0,00124 g m⁻² und 0,0248 g m⁻²) auf das ungekochte Fleischprodukt innerhalb von 96 Stunden übergehen zu lassen.

## Revendications

1. Film d'emballage alimentaire (22) destiné à une utilisation dans la création et la stabilisation d'une couleur souhaitable sur une surface d'observation (100) d'un produit alimentaire contenant de la myoglobine brute (12) sans affecter de façon préjudiciable la couleur sous la surface du produit alimentaire, **caractérisé en ce que** le film est une barrière à l'oxygène et comprend :
a) une couche de contact avec les aliments (24) pouvant entrer en contact avec le produit alimentaire maintenu à l'intérieur de l'emballage formé par le film, et
b) un composé contenant de l'oxyde d'azote (30) qui est à, et/ou réparti sur, la surface de la couche de contact avec les aliments dans une quantité de 0,211 mg.in⁻² (0,327 g.m⁻²) ou moins ; **caractérisé en ce que** ledit film d'emballage alimentaire n'est pas une enveloppe alimentaire comprenant :
c) un matériau en toile comprenant une première face active et une seconde face, ledit matériau en toile comprenant une pluralité de protubérances, lesdites protubérances étant intégrées à ladite première face active et à ladite seconde face, lesdites protubérances comprenant des espaces entre elles ; et
d) un adhésif placé sur ladite première face active dudit matériau en toile à l'intérieur desdits espaces entre lesdites protubérances.

2. Film d'emballage selon la revendication 1, **caractérisé en ce que** le composé contenant de l'oxyde d'azote forme de l'oxyde nitrique lorsqu'il est mis en contact avec le produit alimentaire.

3. Film d'emballage selon la revendication 2, **caractérisé en ce que** le composé contenant de l'oxyde d'azote est un nitrite.

4. Film d'emballage selon la revendication 3, **caractérisé en ce que** le composé contenant de l'oxyde d'azote est un nitrite de sodium.

5. Film d'emballage selon la revendication 1, **caractérisé en ce que** le composé contenant de l'oxyde d'azote est appliqué sur la surface (25) de la couche de contact avec les aliments.

6. Film d'emballage selon la revendication 1, **caractérisé en ce que** le composé contenant de l'oxyde d'azote est incorporé dans la couche de contact avec les aliments.

7. Film d'emballage selon la revendication 1, comprenant au moins une couche supplémentaire (28b, 28a, 26) positionnée sur la couche de contact avec les aliments.

8. Film d'emballage selon la revendication 7, **caractérisé en ce que** ladite au moins une couche supplémentaire est un adhésif (34).

9. Film d'emballage selon la revendication 8, **caractérisé en ce que** l'adhésif comprend le composé contenant de l'oxyde d'azote.

10. Film d'emballage alimentaire selon la revendication 1, **caractérisé en ce que** le film est adapté à un emballage sous vide de l'aliment.

11. Récipient d'emballage alimentaire comprenant un film (22) selon l'une quelconque des revendications précédente et un plateau (14, 16, 18) adapté à y maintenir l'aliment (12), **caractérisé en ce que** le plateau est une barrière à l'oxygène et le film est placé sur le plateau pour y maintenir l'aliment.

12. Récipient d'emballage alimentaire selon la revendication 11, **caractérisé en ce que** le film est utilisé pour emballer sous vide l'aliment dans le plateau et pour essentiellement éliminer la présence d'oxygène entre le film et le plateau.

13. Récipient d'emballage alimentaire selon la revendication 13, **caractérisé en ce que** le plateau comprend le composé contenant de l'oxyde d'azote (30).

14. Procédé d'emballage d'un aliment (12) pour créer et stabiliser une couleur souhaitable sur une surface d'observation (100) d'un aliment sans affecter de façon préjudiciable la couleur sous la surface de l'aliment, comprenant les étapes de : a) fourniture d'un film (22) selon l'une quelconque des revendications précédentes et b) mise en contact du film avec l'aliment pour former un emballage (10) pour l'aliment.

15. Procédé selon la revendication 14, comprenant l'étape d'évacuation de l'oxygène présent entre le film et l'aliment après la mise en contact du film avec l'aliment.

16. Procédé selon la revendication 15, comprenant en outre l'étape d'introduction d'autres gaz hormis l'oxygène ou d'un mélange de gaz hormis l'oxygène entre le film et l'aliment l'évacuation de l'oxygène.

17. Procédé selon la revendication 14, **caractérisé en ce que** l'étape de fourniture d'un film comprend l'application du composé contenant de l'oxyde d'azote sur une surface de contact du film qui entre en contact avec l'aliment.

18. Procédé selon la revendication 14, comprenant l'étape d'évacuation de l'oxygène présent entre le film et l'aliment.

19. Procédé selon la revendication 14, comprenant l'étape de traitement de l'aliment avec un composé contenant de l'oxyde d'azote avant la mise en contact du film avec l'aliment.

20. Viande emballée sous vide comprenant un produit à base de viande non cuite (12) emballé sous vide dans un film ou un récipient selon l'une quelconque des revendications précédentes, **caractérisée en ce que** le film (22) ou le récipient comprend une première couche polymère de barrière à l'oxygène et une seconde couche superficielle (24) contenant un composé contenant de l'oxyde d'azote (30) choisi parmi le nitrite de sodium, le nitrate de sodium, le nitrite de potassium, le nitrate de potassium et les mélanges de ceux-ci, dans une quantité suffisante pour transférer entre 0,0008 et 0,016 milligramme par pouce carré (0,00124 g.m⁻² et 0,0248 g.m⁻²) au produit à base de viande non cuite en l'espace de 96 heures.
